(19) **Europäisches Patentamt / European Patent Office / Office européen des brevets**

(11) **EP 1 443 639 B1**

(12) **EUROPÄISCHE PATENTSCHRIFT**

(45) Veröffentlichungstag und Bekanntmachung des Hinweises auf die Patenterteilung:
**17.09.2008 Patentblatt 2008/38**

(51) Int Cl.:
*H02P 9/30* (2006.01)  *H02K 19/12* (2006.01)
*H02P 9/38* (2006.01)  *H01R 39/00* (2006.01)
*H01R 43/06* (2006.01)

(21) Anmeldenummer: **04100218.9**

(22) Anmeldetag: **22.01.2004**

(54) **Rotierender Erreger für große Ströme**

High current rotating exciter

Excitateur rotatif pour courants forts

(84) Benannte Vertragsstaaten:
**DE GB**

(30) Priorität: **01.02.2003 DE 10304039**

(43) Veröffentlichungstag der Anmeldung:
**04.08.2004 Patentblatt 2004/32**

(73) Patentinhaber: **Alstom Technology Ltd**
**5400 Baden (CH)**

(72) Erfinder: **Lacaze, Alain**
**90850, Essert (FR)**

(56) Entgegenhaltungen:
**EP-A- 0 254 129**  **DE-A- 10 015 924**
**DE-A- 10 119 830**  **SU-A- 468 337**
**US-A- 4 056 882**  **US-A- 6 018 209**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

TECHNISCHES GEBIET

Die vorliegende Erfindung betrifft einen Rotor für einen Erreger zur Verwendung als Speisungsquelle für die Feldwicklung des Rotors eines Generators. Sie bezieht sich insbesondere auf einen Rotor für einen bürstenlosen Erreger, und bezieht sich weiterhin auf einen bürstenlosen Erreger umfassend einen derartigen Rotor sowie auf eine Betriebsweise eines derartigen bürstenlosen Erregers.

STAND DER TECHNIK

Eine synchrone Maschine ist eine dynamoelektrische Maschine, welche als Motor zum Antrieb einer Welle oder irgend einer Last bei konstanter Geschwindigkeit verwendet werden kann, oder als Generator zur Erzeugung einer Spannung einer bestimmten Frequenz abhängig von der Geschwindigkeit der treibenden Welle. Wenn die Vorrichtung als synchroner Generator verwendet wird, ist es üblich, die Felderregung für den Rotor zum Beispiel über einen synchronen bürsten losen Erreger zur Verfügung zu stellen. Der Erregergenerator konvertiert das Gleichstrom(DC)-Statorfeld in eine mehrphasige Wechselstrom(AC)-Anker-Spannung, welche über einen Satz von rotierenden Gleichrichtern gleichgerichtet wird, welche Gleichrichter auf oder innerhalb der treibenden Welle angeordnet sind, um die Gleichstromerregung für die Feldwicklungen des synchronen Generators, d.h. für den Rotor des Generators zur Verfügung zu stellen.

Mit anderen Worten ist ein rotierender Erreger ein umgekehrter Generator, bei welchem die Feldwicklung, mit Gleichstrom gespeist, an den statischen Teilen angeordnet ist. Der Anker befindet sich am rotierenden Teil und erzeugt eine Wechselspannung. Ein Satz von Dioden wird zur Gleichrichtung verwendet, um einen Gleichstrom zu erzeugen, der zur Anregung der Feldwicklung der synchronen Maschine, d.h. des Rotors des Generators, erforderlich ist. Ein bürstenlosen Erreger mit Gleichrichter dioden wird im Dokument SU 468337 beschrieben.

Grössenordnungsmässig bewegt sich die von einem Erreger erzeugte Leistung im Bereich von 0.5 bis 2% der Nennleistung einer synchronen Maschine. Weil der rotierende Erreger ein Generator ist, könnte diese Leistung gleichermassen mit niedriger, mittlerer oder hoher Spannung zur Verfügung gestellt werden. Das Gleichgewicht zwischen Spannung respektive Strom wird gewählt, um der verfügbaren Dioden-Charakteristik möglichst gerecht zu werden. Prinzipiell kann die Limitierung in Bezug auf den Ausgangsstrom, infolge der verfügbaren Dioden, überwunden werden, indem zwei oder mehr Dioden parallel geschaltet werden. Dies resultiert aber eigentlich in einer starken Überladung an Dioden, und so besteht ein Bedarf, die Auslegung zu reduzieren.

Heutzutage werden Rotoren normalerweise bei Geschwindigkeiten von 3000 Umdrehungen pro Minute betrieben, was zu Strömen im Bereich von 2000 Ampere zur Anregung der Feldwicklung der synchronen Maschine führt. Normalerweise kann die synchrone Maschine nicht bei höheren Rotationsgeschwindigkeiten betrieben werden, dies infolge einer Anzahl von Begrenzungen, wie beispielsweise Instabilität der Welle sowie hohe Zentrifugalkräfte an den rotierenden Teilen. Bei der Stromerzeugung ist, für eine gegebene Leistung, eine Erhöhung der Rotationsgeschwindigkeit einer Turbine aber mit einer Reduktion der Grösse und der Kosten verbunden. Die Effizienz kann ebenfalls verbessert werden. So sind bereits Turbinen zur Stromerzeugung bis zu 70 Megawatt über Getriebe an Generatoren gekoppelt, um eine Betriebsweise bei höheren Rotationsgeschwindigkeiten zu erlauben. Entsprechend besteht ein Bedarf nach Rotoren für Erreger, welche bei hohen Rotationsgeschwindigkeiten betrieben werden können. Dies bedeutet normalerweise eine Leichtbaukonstruktion, geringerer Durchmesser, sowie grössere Länge in axialer Richtung sowie Stabilität in Bezug auf die auftretenden zentrifugalen Kräfte (Fliehkräfte).

DARSTELLUNG DER ERFINDUNG

Es ist entsprechend das Ziel der vorliegenden Erfindung, eine neue Rotor-Topologie für einen Erreger zur Verwendung als Speisungsquelle für die Feldwicklung des Rotors eines Generators zur Verfügung zu stellen, welcher bei hohen Rotationsgeschwindigkeiten betrieben werden kann, welcher mehr Flexibilität im Verhältnis Strom/Spannung erlaubt, insbesondere die Erzeugung von grossen Strömen bei niedriger Frequenz im Rotor erlaubt, welcher kompakt ist, kostengünstig und mechanisch widerstandsfähig.

Dieses Ziel wird durch einen Rotor, wie er im kennzeichnenden Teil von Anspruch 1 beschrieben wird, sowie durch einen bürstenlosen Erreger nach Anspruch 10 erreicht. Der vorgeschlagene Rotor nach der Erfindung ist dadurch gekennzeichnet, dass er zwei Leiterstäbe umfasst, welche im wesentlichen parallel zur Achse des Rotors angeordnet sind, dass die Leiterstäbe an ihrem ersten axialen Ende mit einem Kollektorring verbunden sind, und dass die Stäbe an ihrem zweiten axialen Ende individuell mit zwei Ringen über Dioden mit umgekehrter Polarität verbunden sind, sodass der in den Leiterstäben infolge eines statischen Feldes induzierte Wechselstrom zu einem Gleichstrom in den beiden Ringen konvertiert wird.

Diese sehr einfache und widerstandsfähige Konstruktion mit im wesentlichen drei Ringen zur Sammlung des Stroms und wenigstens zwei Leiterstäben parallel zur Achse des Rotors zwischen diesen Ringen erlaubt grössere Ströme, weil grössere Leiter mit weniger Wicklungen und geschweissten Teilen erforderlich sind, und ist besonders für bürstenlose Erregung geeignet. Insbesondere die sehr einfache Gestaltung der Wicklungen in Form von Ringen vereinfacht die Konstruktion wesentlich, und macht sie kleiner und widerstandsfähiger, das heisst die Konstruktion erlaubt sehr hohe periphere Geschwindigkeiten und erhöht die Verwendung des B-Feldes. Die Stab-Technologie, welche für die Verbindungen zwischen den Ringen verwendet werden kann, erlaubt eine günstige Herstellung. Der zweite Vorteil besteht darin, einen Rotor bei niedriger Spannung zu haben, was die Isolation des Rotors einfacher und billiger macht. Der vorgeschlagene Rotor für den Erreger ist inhärent leichter als gewöhnliche Erreger und weist ausserdem die Möglichkeit auf, irgendwo an der Welle angeordnet zu werden. Normalerweise wird der Erreger inline mit der Welle, d.h. an einem Ende der Welle angeordnet. Dies führt zu Problemen mit der kritischen Geschwindigkeit und mit dem überhängenden Gewicht (Hebelwirkung). Wenn die Welle an beiden Seiten angekoppelt werden soll, ist es nicht mehr möglich, den Erreger an einem Ende der Welle anzuordnen. Es müssen dann andere Typen von Erregern verwendet werden, welche schwerer sind, und einen grösseren Einfluss auf das Trägheitsmoment der Welle ausüben. Der vorgeschlagene Rotor erlaubt es, den Erreger komplett in die Welle zu integrieren, was insbesondere für Anordnungen mit zwei Turbinen von Interesse ist, d.h. wenn der Generator zwischen zwei Gasturbinen angeordnet ist, oder wenn ernsthafte Probleme im Zusammenhang mit der kritischen Geschwindigkeit auftreten.

Gemäss einer ersten bevorzugten Ausführungsform der vorliegenden Erfindung ist der Kollektorring umlaufend ausgebildet, und vorzugsweise sind auch die beiden Ringe umlaufend ausgebildet. Die Verwendung von geschlossenen Ringen ist sehr einfach und billig, und es ist gleichzeitig eine Konstruktion mit sehr grosser Stabilität in Bezug auf zentrifugale Belastung.

Entsprechend einer anderen bevorzugten Ausführungsform sind die Leiterstäbe nahe an der radialen Oberfläche des Rotors angeordnet, vorzugsweise so nahe wie möglich beim Luftspalt zwischen dem Rotor und dem statischen äusseren Kern. Diese Anordnung erlaubt die maximale Induktion in den Stäben, was auch zur höchstmöglichen Effizienz in Bezug auf die Erzeugung des Gleichstromes führt.

Gemäss einer weiteren bevorzugten Ausführungsform sind wenigstens 4 Leiterstäbe, vorzugsweise wenigstens 8 Leiterstäbe und besonders bevorzugt 16 Leiterstäbe vorhanden, welche alle gleichmässig um den Umfang des Rotors verteilt sind. Auch eine grössere Anzahl von parallelen Stäben ist möglich, so z.B. bis zu 100 Stäbe. Im wesentlichen ist diese Bauweise topologisch identisch zu einem so genannten Kurzschlusskäfig-Rotor ("squirrel cage rotor"), wie er typischerweise für elektrische Motoren verwendet wird. Dieses Design erweist sich auch als sehr geeignet für die Verwendung in einem bürstenlosen Erreger, da diese Topologie hohe Ströme erlaubt und infolge ihrer Symmetrie inhärent ein gut balanciertes Verhalten der Ströme zwischen den verschiedenen parallelen Pfaden entlang der Stäbe zeigt. Tatsächlich vermeidet die Äquivalenz aller Stäbe im wesentlichen Wirbelströme (Eddy-Currents), welche sonst normalerweise durch spezielle Bauweisen der Leiter berücksichtigt werden müssen. Diese inhärente Balance zwischen den Stäben, das heisst den leitenden Pfaden, erlaubt die Verwendung von im wesentlichen beliebiger Qualität von Dioden, und individuelle Dioden müssen nicht für grosse Ströme oder für hohe Spannungen oder für hohe Geschwindigkeit ausgelegt werden. Dies dank der Tatsache, dass keine Spitzen oder Welligkeiten in den induzierten Strömen auftreten.

Entsprechend einer anderen bevorzugten Ausführungsform sind die Leiterstäbe aus Aluminium oder Kupfer gefertigt, mit einem im wesentlichen kreisförmigen Querschnitt mit einem Durchmesser im Bereich von 5 bis 20 mm, vorzugsweise mit einem Durchmesser im Bereich von 10 bis 15 mm. Die einfache und billige Konstruktion in Stabtechnologie ist möglich, und es besteht kein Bedarf nach komplizierten mehrschichtigen Systemen oder nach Systemen mit Mehrfach-Leitern für die Verbindungen zwischen den Ringen. Normalerweise sind auch die Ringe aus Aluminium oder Kupfer gefertigt, mit einer Querschnittsfläche im Bereich von 500 bis 3000 $mm^2$, vorzugsweise mit einer Querschnittsfläche im Bereich von 1000 bis 2000 $mm^2$.

Vorzugsweise kann ein derartiger Rotor bei einer Geschwindigkeit von 6000 bis 8000 U/min betrieben werden, wobei in den beiden Ringen ein Gleichstrom von mehr als 2000 Ampere, vorzugsweise von mehr als 10000 Ampere induziert wird. Diese sehr hohe Rotationsgeschwindigkeit bei grossen Strömen ist dank der kompakten und widerstandsfähigen Konstruktion des Rotors möglich. Das statische Feld zur Reduktion der Ströme in den Leiterstäben wird durch eine Feldwicklung auf dem statischen äusseren Kern als bipolares statisches magnetisches Feld zur Verfügung gestellt. Es ist aber auch möglich, dieses durch einen Permanentmagneten zur Verfügung zu stellen, welcher am statischen äusseren Kern angeordnet ist. Auch multi-polare statische Felder sind möglich. Im Fall eines Permanentmagneten kann dessen Feld durch eine entsprechende zusätzliche Feldwicklung verstärkt oder abgeschwächt werden, um die Kontrolle des durch den Erreger erzeugten Gleichstroms zu erlauben. Das Feld dieser Feldwicklung addiert oder subtrahiert sich vom statischen Feld, welches vom Permanentmagneten erzeugt wird (Feldwicklung für den Offset, d.h. für die Verschiebung vom Hintergrundfeld).

Weitere bevorzugte Ausführungsformen sind in den abhängigen Ansprüchen beschrieben.

Die vorliegende Erfindung bezieht sich ausserdem auf einen bürstenlosen Erreger zur Verwendung in einem synchronen Generator zur Speisung der Feldwicklung von dessen Rotor, wobei ein Rotor, wie er oben beschrieben wurde, Anwendung findet. Vorzugsweise wird in einem derartigen bürstenlosen Erreger das bipolare statische Feld durch wenigstens eine Feldwicklung induziert, welche mit einem Gleichstrom im Bereich von 1 bis 100 Ampere, vorzugsweise in einem Bereich von 5 bis 15 Ampere, gespeist wird. Oder das bipolare statische Feld wird von einem Permanentmagneten erzeugt, wobei die Regelung des bipolaren statischen Feldes in diesem Fall durch eine Feldwicklung erreicht wird, welche das durch den Permanentmagneten zur Verfügung gestellte Hintergrundfeld entweder abschwächt oder verstärkt.

Idealerweise stellt ein Permanentmagnet oder eine statische Feldwicklung am statischen äusseren Kern ein magnetisches Feld zur Verfügung, welches homogen rechteckig ausgebildet ist, d.h. bei welchem die Feldstärke konstant ist als Funktion der Winkelposition mit einem Vorzeichenwechsel entsprechend einer Stufenfunktion (Heavyside-Funktion) an jenen Winkelpositionen, wo die Polarität wechselt. Es ist aber bekannt, dass, sobald der Rotor zu rotieren beginnt, eine Anker-Reaktion auftritt, welche zu einem statischen Reaktionsfeld Anlass gibt, welches sich dem infolge der statischen Feldwicklung vorhandenen statischen Feld überlagert. Dieses zusätzliche Reaktionsfeld oder diese Anker-Reaktion verzerrt das für die Leiterstäbe sichtbare Feld, und führt zu einem inhomogenen Verhalten zwischen den unterschiedlichen Stäben und zu Welligkeiten respektive Spitzen in den induzierten Strömen. Entsprechend kann es vorteilhaft oder manchmal sogar notwendig sein, wie in einer weiteren bevorzugten Ausführungsform vorgeschlagen, Mittel zur Kompensation der Anker-Reaktion des rotierenden Rotors vorzusehen.

Entsprechend einer bevorzugten Ausführungsform der Mittel zur Kompensation der Anker-Reaktion werden diese durch einen Satz von Hilfswicklungen am statischen äusseren Kern realisiert, wobei vorzugsweise die Geometrie dieser Hilfswicklungen die Gleiche ist wie jene der Leiterstäbe des Rotors. Die Anpassung der Symmetrie der Mittel zur Kompensation der Anker-Reaktion an die Symmetrie des Rotors stellt eine sehr einfache und gleichzeitig sehr effiziente Möglichkeit der Kompensation dieser Anker-Reaktion zur Verfügung. Eine beinahe vollständige Wiederherstellung des idealen homogenen Feldes, wie es von der statischen Feldwicklung erzeugt wird, wenn der Rotor nicht rotiert, ist bei Verwendung dieser symmetrischen Topologie möglich. Wiederum kann dies durch Verwendung von einfacher Stabtechnologie erreicht werden, was eine einfache und kostengünstige Herstellung dieser Kompensationsmittel für die Anker-Reaktion erlaubt.

Einer weiteren bevorzugten Ausführungsform entsprechend sind die Mittel zur Kompensation der Anker-Reaktion, die Hilfswicklungen zur Kompensation, im wesentlichen an der inneren Oberfläche des statischen äusseren Kerns angeordnet, wobei die Hilfswicklungen in der Region des Rotors im wesentlichen parallel zur Achse des Rotors angeordnet sind. Vorzugsweise werden gleich viele individuelle Leiter der Hilfswicklungen vorgesehen, wie Leiterstäbe am Rotor vorhanden sind, sodass, wie oben erwähnt, die gleiche Symmetrie wie beim Rotor realisiert wird. Dies ist insbesondere dann der Fall, wenn diese individuellen Leiter der Hilfswicklungen gleichmässig über den Umfang des Luftspaltes verteilt sind und auch die Stäbe des Rotors gleichmässig über den Umfang des Rotors verteilt sind. Einfache und leicht kontrollierbare Kompensation der Anker-Reaktion ist möglich, wenn die einzelnen Leiter der Hilfswicklungen im wesentlichen gleichermassen mit einem Gleichstrom gespeist werden, dessen Richtung der Richtung des Stroms, welcher in den Leitern des Rotors bei dessen Rotation induziert wird, entgegengesetzt ist.

Insbesondere während Transienten, d.h. wenn das induzierte Feld reduziert oder erhöht wird, kann der durch die individuellen Stäbe des Rotors fliessende Strom nicht vom resultierenden Gleichstrom oder vom induzierten statischen Feld abgeleitet oder vorhergesagt werden. Entsprechend ist es zur Vermeidung von Überlast an den Dioden infolge von Welligkeiten und ähnlichem nötig, Mittel zur Anpassung der Kompensationsströme an die tatsächlich in den Stäben des Rotors fliessenden Ströme vorzusehen. Entsprechend werden, gemäss einer anderen bevorzugten Ausführungsform, Mittel zur Messung vorgesehen, um eine derartige Regelung zu erlauben. Entsprechend wird wenigstens ein Sensor zur Messung der Anker-Reaktion und zur Regelung der Mittel zur Kompensation der genannten Anker-Reaktion angeordnet.

Es existiert eine Vielzahl von Sensoren für magnetische Felder, wie zum Beispiel Hall-Sensoren, welche nur auf die Komponente des magnetischen Feldes in einer Raumrichtung empfindlich sind, aber nicht auf Komponenten senkrecht zu dieser bevorzugten Richtung. Ein derartiger Sensor ist im vorliegenden Zusammenhang besonders gut geeignet, wenn er an einer Position angeordnet wird, an welcher das statische magnetische Feld, welches von der Feldwicklung induziert wird, im wesentlichen senkrecht zur empfindlichen Richtung des Sensors liegt. Die Verwendung eines derartigen Sensors, entsprechend positioniert in dieser speziellen Region, bei welcher die Komponente des gewünschten statischen magnetischen Feldes orthogonal zur empfindlichen Richtung des Sensors verläuft, erlaubt eine genaue und im wesentlichen verschiebungsfreie (offsetfreie) Messung der Anker-Reaktion. Eine derartige Position, bei welcher dieser Sensor angeordnet werden kann, ist bei der Feldwicklung in oder nahe beim Luftspalt, mit der empfindlichen Achse des Sensors senkrecht (d.h. radial auswärts in Bezug auf die Achse des Rotors) zur Achse des magnetischen Feldes, wie es von der statischen Feldwicklung induziert wird.

Weitere bevorzugte Ausführungsformen des vorgeschlagenen bürstenlosen Erregers sind in den abhängigen Ansprüchen angegeben.

Weiterhin betrifft die vorliegende Erfindung ein Verfahren zum Betrieb eines bürstenlosen Erregers, wie er oben beschrieben wurde, welches dadurch gekennzeichnet ist, dass während der Zeit von Transienten, wenn das statische magnetische Feld entweder reduziert oder erhöht wird, Mittel zur Messung, welche die Anker-Reaktion ausmessen, verwendet werden, um den durch die Hilfswicklungen gespeisten Strom zu kontrollieren.

Weitere bevorzugte Ausführungsformen des Verfahrens sind in den abhängigen Ansprüchen beschrieben.

KURZE ERLÄUTERUNG DER FIGUREN

Eine umfassendere Würdigung der Erfindung und viele der damit verbundenen Vorteile werden ersichtlich, wenn die Erfindung unter Zuhilfenahme der nun folgenden detaillierten Beschreibung im Zusammenhang mit den zugehörigen Figuren weiter erläutert wird. Die Figuren zeigen:

Fig. 1    eine schematische Darstellung des statischen magnetischen Feldes (B) als Funktion des Umlaufwinkels Theta;

Fig. 2    a) einen schematischen Schnitt senkrecht zur Achse des Erregers durch einen Rotor nach der vorliegenden Erfindung;
b) schematisch die elektrische Konnektivität des Rotors;

Fig. 3    einen Schnitt entsprechend Fig. 2a), wobei die Anker-Reaktion bei Rotation des Rotors angedeutet ist ; und

Fig. 4    einen Schnitt entsprechend Fig. 2a), wobei zusätzlich Mittel zur Kompensation der Anker-Reaktion auf dem statischen äusseren Kern angeordnet sind.

**WEGE ZUR AUSFÜHRUNG DER ERFINDUNG**

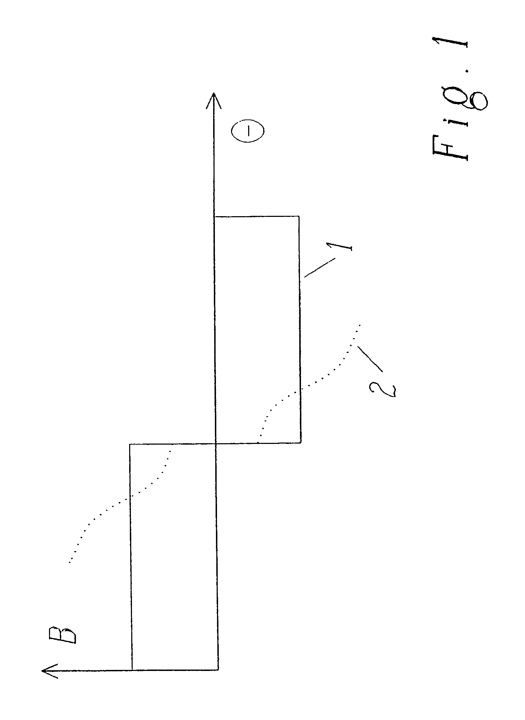

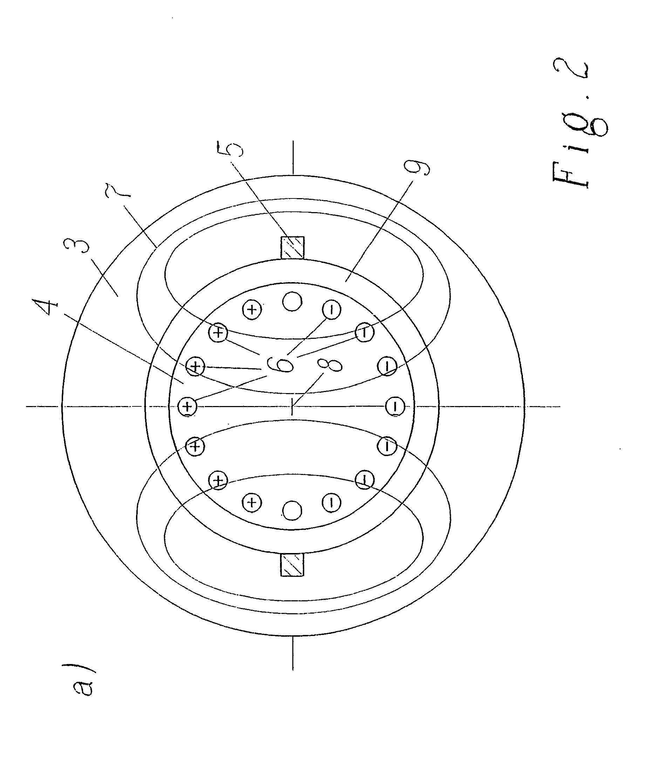

Fig. 2a) zeigt einen axialen Schnitt durch einen Erreger, welcher als bevorzugtes Ausführungsbeispiel dienen soll. Der Rotor 4 ist koaxial in einem statischen äusseren magnetischen Kern 3 gelagert, wobei dazwischen ein Luftspalt 9 verbleibt. Der statische äussere Kern 3 umfasst eine Feldwicklung 5, welche ein Magnetfeld induziert, wie es mit den Linien 7 angedeutet ist. In diesem Ausführungsbeispiel ist das induzierte magnetische Feld 7 bipolar, d.h. die Feldwicklung 5 wird mit einem positiven Strom auf der rechten Seite und mit einem negativen Strom auf der linken Seite oder umgekehrt in Fig. 2a) gespeist. Es ist aber auch möglich, zur Erzeugung eines derartigen bipolaren Feldes einen Permanentmagneten zu verwenden. Die Verwendung eines Permanentmagneten erlaubt es nicht, direkt den im Rotor induzierten Strom zu kontrollieren, was aber zur Kontrolle der Leistung des Generators notwendig ist. Deshalb wird üblicherweise, wenn Permanentmagnete verwendet werden, ausserdem eine Feldwicklung 5 angeordnet, welche dazu verwendet werden kann, das statische magnetische Hintergrund-Feld entweder zu erhöhen oder zu erniedrigen, indem die Feldwicklung mit einem entsprechenden Strom gespeist wird. Das induzierte magnetische Feld 1, welches durch die Feldwicklung 5 induziert wird, ist schematisch in Fig. 1 als Funktion des Winkels Theta um die gemeinsame Achse 8 von Rotor 4 und statischem äusserem Kern 3 dargestellt. Das ideale magnetische Feld 1 zeigt eine rechteckige Charakteristik, wobei der Vorzeichenwechsel an jener Position angeordnet ist, wo Theta zur Feldwicklung 5 zeigt, d.h. horizontal in Fig. 2a).

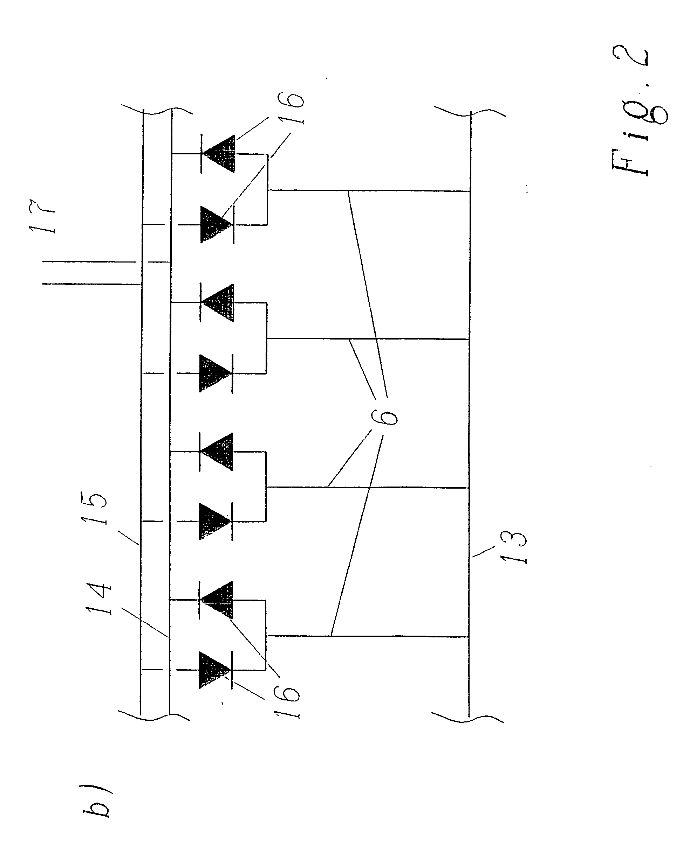

Wie in Fig. 2a) ersichtlich ist, sieht der rotierende Teil, d.h. der Rotor 4, aus wie ein Teil einer Induktionsmaschine mit einem Kurzschlusskäfig-Rotor (so genannter squirrel cage type rotor). Auf der einen Seite sind alle Leiter, welche in diesem Fall als Stäbe 6 realisiert sind, mit einem Ring 13 verschweisst oder elektrisch verbunden (vgl. Fig. 2b)). Der Ring 13 sammelt den Strom und leitet ihn zu den zurückführenden Stäben 6. Auf der anderen Seite ist jeder Stab 6 individuell mit zwei Ringen 14 und 15 über Dioden 16 mit umgekehrter Polarität verbunden. Diese zwei Ringe sind die Gleichstrompole. Alle Stäbe 6 sind identisch und sind gleichmässig um den Umfang des Rotors 4 verteilt. Die gekreuzten Dioden 16 führen zu einer Gleichrichtung des in den Stäben 6 bei Rotation des Rotors im statischen magnetischen Feld 7 induzierten Wechselstroms, was zu einem Gleichstrom (DC) in den beiden Ringen 14 und 15 führt. Der entsprechende Strom 17 kann anschliessend zur Speisung des Rotors des Generators verwendet werden.

Die Stäbe 6 sowie die Ringe 13, 14, 15 sind aus Kupfer oder Aluminium gefertigt. Bei einem Durchmesser des Rotors 4 von 600 Millimeter sind 50 Stäbe über den Umfang des Rotors 4 verteilt, wobei jeder der Stäbe 6 einen im wesentlichen kreisförmigen Querschnitt mit einem Durchmesser von 10 bis 15 Millimeter aufweist. Ein derartiger Rotor ist in der Lage, Rotationsgeschwindigkeiten von 4000 bis 8000 Umdrehungen pro Minute auszuhalten, und einen Gleichstrom im Bereich von 5000 bis 20000 Ampere zu erzeugen. Die erreichbaren Rotationsgeschwindigkeiten sind entsprechend mindestens zweimal so hoch wie die konventionellen Geschwindigkeiten, und die erreichbaren Ströme sind sogar 20 bis 30 mal höher als nach dem Stand der Technik. Die Ringe 13, 14, 15 sind kreisförmig ausgebildet, um den bei derartigen Rotationen auftretenden zentrifugalen Kräften widerstehen zu können. Die Stäbe 6 können direkt in entsprechende Schlitze im Rotor 4 gegossen werden, wobei die Schlitze vorzugsweise eine Form aufweisen, welche eine gute Fixierung der Stäbe in Bezug auf die zentrifugalen Kräfte erlaubt (z.B. Schwalbenschwänze). Eine andere Möglichkeit besteht darin, axiale Löcher im Rotor 4 vorzusehen, und die Stäbe 6 in diese Löcher aus axialer Richtung einzuschieben.

In einer derartigen Anordnung hat man eine grosse Anzahl von parallel gerichteten Dioden. Wenn eine Diode überlastet wird, wird sie ausfallen, was in einem permanenten Kurzschluss und einem totalen Ausfall resultiert. Es ist entsprechend wichtig, dass der Strom perfekt zwischen allen parallelen Pfaden balanciert ist.

Die interne Spannung V über eine bestimmte Diode ist die Summe der Schwellenspannung, $V_0$, plus ein Beitrag, welcher proportional zum Strom ist:

$$V = V_0 + r_t I$$

Der innere Widerstand ist ziemlich schwach und jedes Ungleichgewicht in der elektromotorischen Kraft würde in einer grossen Diskrepanz im Strom durch die parallelen Dioden resultieren.

Um eine im wesentlichen exakt gleiche elektromotorische Kraft an jedem parallelen Stab des Kurzschlusskäfig-Rotors zu gewährleisten, sollte das Feld im Luftspalt so "rechteckig" wie möglich sein, wie dies in der Kurve 1 in Fig. 1 angegeben ist, und wie es durch die Feldwicklung 5 nach Fig. 2a) induziert wird.

Wenn im Kurzschlusskäfig-Rotor kein Strom fliesst, entspricht das Feld 7 der geforderten rechteckigen Form gut. Die Situation verschlechtert sich, sobald ein Strom im "squirrel cage" fliesst, d.h. in den Stäben 6, wie dies in Fig. 2a) durch die plus- und minus-Zeichen angegeben ist. Wenn der in den Stäben 6 fliessende Gleichstrom niedrig ist, wird er mehr oder weniger entsprechend der erzeugten Spannung verteilt sein.

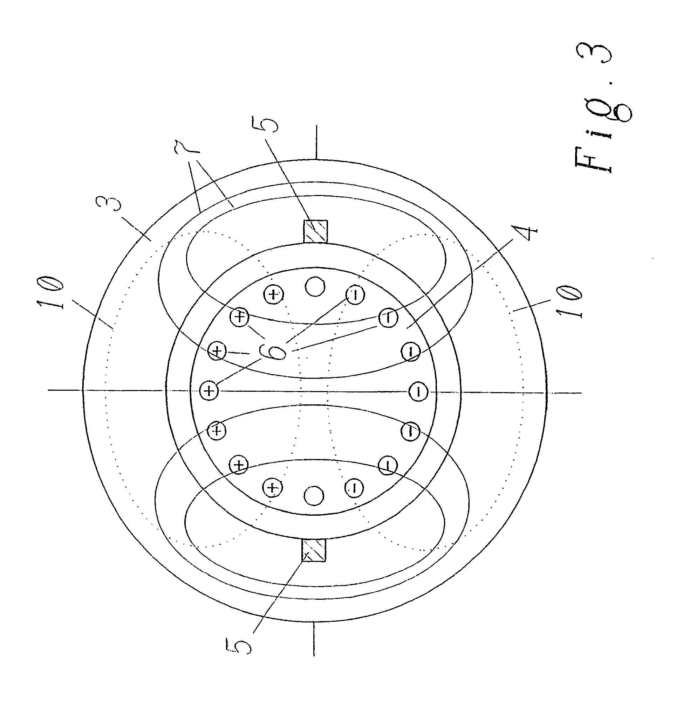

Das resultierende Flussmuster ist in Fig. 3 dargestellt. Es erzeugt eine Anker-Reaktion 10 mit einer 90 Grad Verschiebung, wie dies bei synchronen Maschinen üblich ist. Dieses Feld ist statisch, von konstanter Grösse und Richtung, und addiert sich zum Hauptfeld 7, wie es von der einzelnen Feldwicklung 5 erzeugt wird. Die Winkelverteilung des Feldes 10 entspricht mehr oder weniger einer Sinuskurve, während das induzierte Feld 7 rechteckig und 90 Grad ausser Phase ist. Wenn der Strom in den Stäben 6 zunimmt, nimmt auch die Anker-Reaktion 10 zu, was zu einer Deformation des magnetischen Feldes führt. Dies führt qualitativ zu einer Feldcharakteristik, wie sie durch die gepunktete Linie 2 in Fig. 1 angedeutet ist.

Die durch dieses deformierte Feld 2 erzeugte Spannung zeigt nicht mehr die erforderliche Rechteckform. Es resultiert ein verzerrtes Spannungsmuster, was seinerseits zu einer zusätzlichen Verzerrung des Feldes führt (die sich mit der ersteren Verzerrung aufbaut). Am Ende dieses Prozesses resultiert diese Verzerrung in einem nicht tolerierbar hohen Wert des wiederholten Spitzenstroms in den Dioden, aber immer noch mit einem für die Dioden erträglichen Mittelwert. Früher oder später wird eine Diode ausfallen, was zu einer Kaskade von Ausfällen der anderen Dioden führt.

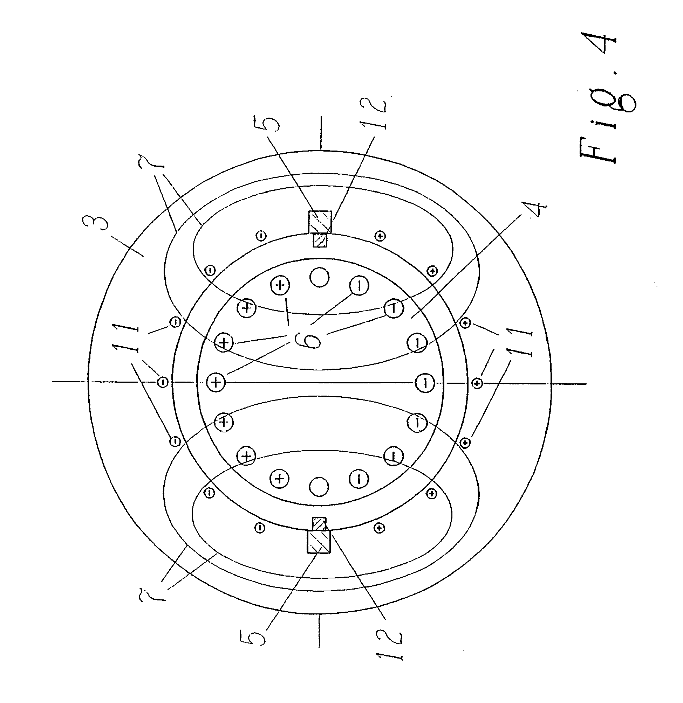

Entsprechend ist es vorteilhaft, bei einem derartigen Rotor 4 Mittel zur Kompensation der Anker-Reaktion 10 vorzusehen. Wie in Fig. 4 angedeutet, besteht die Idee einfach darin, eine Hilfswicklung 11 am statischen Teil 3 vorzusehen, um die Anker-Reaktion 10 zu kompensieren. Diese Hilfswicklungen 11 sollten einfach die gleiche Geometrie wie die Stäbe 6 des Rotors, d.h.

des Kurzschlusskäfigs haben. Weil eine gleichmässige Verteilung des Stroms in den rotierenden Teilen erwünscht ist, muss die Anker-Reaktion 10 mit einer gleichmässigen Winkelverteilung von Strömen kompensiert werden. Die Hilfswicklungen 11 sollten einfach durch einen Gleichstrom der gleichen Amplitude in jedem Schlitz gespeist werden. Am einfachsten ist es, alle Hilfswicklungen 11 parallel anzuordnen, sodass die Leiter 11, welche auf einer Seite der Hauptwicklung angeordnet sind, Strom in einer Richtung führen, und die Leiter auf der anderen Seite Strom in der Gegenrichtung. Diese Situation ist in Fig. 4 durch plus- und minus-Zeichen, welche entgegengesetzt zu den Zeichen des Rotors 4 sind, angedeutet.

Insbesondere während Übergängen (Transienten) folgt der durch den Erreger 17 erzeugte Strom nicht genau der erzeugten Spannung. Derartige Übergänge liegen z.B. vor, wenn das induzierte Feld 7 erhöht oder erniedrigt wird, indem der Gleichstrom, welcher durch die statische Feldwicklung 5 zur Änderung des Gleichstroms 17 für den Rotor des Generators geändert wird, wodurch die Leistung des Generators geändert wird. Infolge von Sättigungseffekten und Windungsanordnung (Turn-Localization) kann der tatsächliche Strom, mit welchem die Hilfswicklungen 11 gespeist werden sollten, weder vom Strom durch die Wicklung 5 noch vom Ausgangsstrom 17 abgeleitet werden. Da die Anker-Reaktion 10 u.U. von der Einstellung des Erregers abhängt, und um eine Regelung zu ermöglichen, kann vorzugsweise der Strom durch die Hilfswicklungen 11 durch eine einfache Feldmessung im Luftspalt 9 bestimmt werden, z.B. bei der mittleren Winkelposition der Hauptwicklung 5, wo die Anker-Reaktion am stärksten ist, und wo das Hauptfeld theoretisch null ist, insbesondere in einer Richtung senkrecht zur Ebene, welche durch die Hauptwicklung 5 definiert wird.

Die Feldmessung kann zum Beispiel mit einem Sensor 12 durchgeführt werden, wie dies in Fig. 4 angedeutet ist. Der Sensor kann zum Beispiel ein Hall-Sensor sein, wobei die Achse, bezüglich welcher der Sensor tatsächlich in der Lage ist, das magnetische Feld zu messen, senkrecht zur Achse liegt, welche durch die durch die statische Wicklung 5 definierte Ebene gegeben ist, und somit senkrecht zur Hauptrichtung des gewünschten statischen Hauptfelds 7 (d.h. horizontal in Fig. 4). Für maximale Empfindlichkeit des Sensors 12 sollte dessen empfindliche Achse parallel zur Hauptkomponente der Anker-Reaktion 10 orientiert sein.

Die gleiche Konfiguration und die gleichen Ausgleichsmittel können bei 4 Polen oder höheren Polzahlen verwendet werden. Die Hauptvorteile sind:

- Spannung/Stromverhältnisse können geändert werden, indem Pole in Serie geschaltet werden.

- Reduzierter Querschnitt des magnetischen Kerns.

- Kleinerer Querschnitt und geringere Länge der Endwicklungen der Hauptwicklung, der Hilfswicklungen und des Kurzschlusskäfigs.

• Bessere Balance der magnetischen Kräfte.

Es gibt aber auch Nachteile, wenn mehr als ein Paar von Polen verwendet wird, zum Beispiel:

• Erhöhte Frequenz der Kommutierung der Dioden.

• Die Verbindungsringe des Kurzschlusskäfigs müssen aufgeteilt werden. Die mechanische Realisierung zur Aufnahme der zentrifugalen Kräfte wird schwieriger und somit teurer.

Wie bereits oben erwähnt, kann zur Erzeugung des statischen Feldes 7 auch ein Permanentmagnet verwendet werden. Die Verwendung eines Permanentmagneten ist ziemlich einfach, weil er am statischen Teil 3 angeordnet ist und weil das gewünschte Feld rechteckig ist. Der Vorteil einer Verwendung von Permanentmagneten zur Erzeugung eines Hintergrund-Feldes (welches, wenn erforderlich, abgeschwächt oder erhöht werden kann durch eine zusätzliche Feldwicklung zur Erzeugung eines Offsets auf dem Hintergrundfeld, das vom Permanentmagneten erzeugt ist) ist, erstens, die Anker-Reaktion 10 zu reduzieren und so dessen Kompensation zu erleichtern. Die spezifische Geometrie eines derartigen Erregers erlaubt es, die Hauptwicklung 5 zu bewahren und diese nur dazu zu verwenden, ein Offset-Feld zu erzeugen. So kann zum Beispiel der Permanentmagnet dazu verwendet werden, das erforderliche Feld für den Nennstrom des Rotors des Generators zu erzeugen. Die Hauptspule 5 des Erregers wird anschliessend nur dazu verwendet, das magnetische Feld um vergleichsweise kleine Beträge zu erhöhen oder zu erniedrigen, um die Spannung des Generators zu regulieren. Die Spannung auf der Hauptwicklung wird entsprechend nur dann hoch sein, wenn keine Last anliegt oder wenn Überlast gefahren wird.

Zusammenfassend können folgende Vorteile der neuen Erreger-Topologie genannt werden:

• Kompaktheit: infolge der einfachen Endwicklungen.

• Robuste Wicklung: erlaubt sehr hohe periphere Geschwindigkeiten, und damit Erhöhung der B-Feld Nutzung (V=B.l.v: Erhöhung der Geschwindigkeit erlaubt es, kürzere Längen oder schwächere magnetische Felder zu haben).

• Günstige Herstellung: ähnlich einer Induktionsmaschine, Stabtechnologie.

• Sehr kurze Kommutationszeit infolge der niedrigen Induktion der Schleifen.

• Das Ende des Schaftes steht für andere Zwecke zur Verfügung.

• Die Verwendung von Dioden jeder Güte ist möglich, die individuellen Dioden müssen nicht zwingend für hohen Strom oder hohe Spannungen oder für hohe Geschwindigkeit ausgelegt sein.

• Der Erreger kann vollständig in die Welle integriert werden. Dies ist von besonderem Interesse für Anordnungen mit doppelten Turbinen, wo auf beiden Seiten des Generators eine Turbine angeordnet ist, oder wenn ernsthafte Geschwindigkeitsprobleme auftreten.

BEZUGSZEICHENLISTE

1      ideales Feld im Luftspalt
2      ungefähres Feld im Luftspalt mit Anker-Reaktion
3      statischer äusserer Magnetkern
4      Rotor
5      Feldwicklung
6      Stäbe des "squirrel cage" Rotors (Kurzschlusskäfig-Rotor)
7      durch die Feldwicklung induziertes Feld
8      Achse des Rotors
9      Luftspalt
10     Anker-Reaktion
11     Hilfswicklung
12     Sensor
13     Kollektorring
14     erster Gleichstrom (DC)-Ring
15     zweiter Gleichstrom (DC)-Ring
16     Dioden
17     Gleichstrom vom Rotor zum Generator

**Patentansprüche**

1. Rotor (4) für einen Erreger zur Verwendung als Speisungsquelle für die Feldwicklung des Rotors eines Generators,
**dadurch gekennzeichnet, dass**
der Rotor (4) wenigstens zwei Leiterstäbe (6) umfasst, welche im wesentlichen parallel zur Achse (8) des Rotors (4) angeordnet sind, dass die Leiterstäbe (6) an ihrem ersten axialen Ende mit einem Kollektorring (13) verbunden sind, und dass die Stäbe (6) an ihrem zweiten axialen Ende individuell mit zwei Ringen (14, 15) über Dioden (16) mit umgekehrter Polarität verbunden sind, sodass der in den Leiterstäben (6) infolge eines statischen Feldes (7) induzierte Wechselstrom zu einem Gleichstrom (DC) in den beiden Ringen (14, 15) konvertiert wird.

2. Rotor (4) nach Anspruch 1, **dadurch gekennzeichnet, dass** der Kollektorring (13) umlaufend ist, und dass vorzugsweise auch die beiden Ringe (14, 15) umlaufend sind.

3. Rotor (4) nach einem der vorhergehenden Ansprüche, **dadurch gekennzeichnet, dass** die Leiterstäbe (6) nahe an der radialen Oberfläche des Rotors (4) angeordnet sind, vorzugsweise so nahe wie möglich beim Luftspalt (8) zwischen dem Rotor (4) und dem statischen äusseren Kern (3).

4. Rotor (4) nach einem der vorhergehenden Ansprüche, **dadurch gekennzeichnet, dass** wenigstens 4 Leiterstäbe (6), vorzugsweise wenigstens 8 Leiterstäbe (6) und besonders bevorzugt 16 Leiterstäbe (6) vorhanden sind, welche alle gleichmässig um den Umfang des Rotors (4) verteilt sind.

5. Rotor (4) nach einem der vorhergehenden Ansprüche, **dadurch gekennzeichnet, dass** die Leiterstäbe (6) aus Aluminium oder Kupfer, mit einem im wesentlichen kreisförmigen Querschnitt mit einem Durchmesser im Bereich von 5 bis 20 mm, vorzugsweise mit einem Durchmesser im Bereich von 10 bis 15 mm, gefertigt sind.

6. Rotor (4) nach einem der vorhergehenden Ansprüche, **dadurch gekennzeichnet, dass** die Ringe (13-15) aus Aluminium oder Kupfer, mit einer Querschnittsfläche im Bereich von 500 bis 3000 mm$^2$, vorzugsweise mit einer Querschnittsfläche im Bereich von 1000 bis 2000 mm$^2$, gefertigt sind.

7. Rotor (4) nach einem der vorhergehenden Ansprüche, **dadurch gekennzeichnet, dass** er bei einer Geschwindigkeit von 6000 bis 8000 U/min betrieben werden kann, wobei ein Gleichstrom in den beiden Ringen (14, 15) von mehr als 2000 Ampere, vorzugsweise ein Gleichstrom von mehr als 10000 Ampere induziert wird.

8. Rotor (4) nach einem der vorhergehenden Ansprüche, **dadurch gekennzeichnet, dass** das statische Feld (7) durch eine Feldwicklung (5) auf dem statischen äusseren Kern (3) als bipolares statisches magnetisches Feld erzeugt wird.

9. Rotor (4) nach einem der vorhergehenden Ansprüche, **dadurch gekennzeichnet, dass** er für bürstenlose Erregung eingesetzt werden kann.

10. Bürstenloser Erreger zur Verwendung in einem synchronen Generator zur Speisung der Feldwicklung von dessen Rotor, **dadurch gekennzeichnet, dass** der Erreger einen Rotor (4) nach einem der Ansprüche 1 bis 9 umfasst.

11. Bürstenloser Erreger nach Anspruch 10, **dadurch gekennzeichnet, dass** das bipolare statische Feld (7) durch wenigstens eine Feldwicklung (5) induziert wird, welche mit einem Gleichstrom im Bereich von 1 bis 100 Ampere, vorzugsweise in einem Bereich von 5 bis 15 Ampere, gespeist wird, oder dass das bipolare statische Feld (7) von einem Permanentmagneten erzeugt wird, und dass die Regelung des bipolaren statischen Feldes (7) in diesem Fall durch eine Feldwicklung (5) bewirkt wird.

12. Bürstenloser Erreger nach einem der Ansprüche 10 oder 11, **dadurch gekennzeichnet, dass** Mittel (11) zur Kompensation der Anker-Reaktion (10) des rotierenden Rotors (4) vorgesehen sind.

13. Bürstenloser Erreger nach Anspruch 12, **dadurch gekennzeichnet, dass** die Kompensation der Anker-Reaktion durch einen Satz von Hilfswicklungen (11) am statischen äusseren Kern (3) realisiert wird, und dass vorzugsweise die Geometrie dieser Hilfswicklungen (11) die Gleiche ist wie jene der Leiterstäbe (6) des Rotors (4).

14. Bürstenloser Erreger nach Anspruch 13, **dadurch gekennzeichnet, dass** die Hilfswicklungen (11) im wesentlichen an der inneren Oberfläche des statischen äusseren Kerns (3) angeordnet sind, und dass in der Region des Rotors (4) die Hilfswicklungen (11) im wesentlichen parallel zur Achse (8) des Rotors (4) orientiert sind.

15. Bürstenloser Erreger nach Anspruch 14, **dadurch gekennzeichnet, dass** gleich viele individuelle Leiter der Hilfswicklungen (11) vorhanden sind, wie Leiterstäbe (6) am Rotor (4) vorhanden sind, und dass diese individuellen Leiter der Hilfswicklungen (11) gleichmässig über den Umfang des Luftspaltes (9) verteilt sind.

16. Bürstenloser Erreger nach Anspruch 15, **dadurch gekennzeichnet, dass** die einzelnen Leiter der Hilfswicklungen (11) im wesentlichen gleichermassen mit einem Gleichstrom gespeist werden, dessen Richtung der Richtung des Stroms, welcher in den Leitern (6) des Rotors (4) bei dessen Rotation induziert wird, entgegengesetzt ist, sodass die Anker-Reaktion (10) kompensiert wird.

17. Bürstenloser Erreger nach einem der Ansprüche 12 bis 16, **dadurch gekennzeichnet, dass** wenigstens ein Sensor (12) zur Messung der Anker-Reaktion (10) vorhanden ist, und dass der durch die Hilfswicklungen (11) zur Kompensation der Anker-Reaktion (10) gespeiste Strom in Abhängigkeit des durch diesen Sensor (12) erzeugten Signals geregelt wird.

18. Bürstenloser Erreger nach Anspruch 17, **dadurch gekennzeichnet, dass** der Sensor (12) nur für Magnetfeldkomponenten in einer räumlichen Richtung empfindlich ist aber nicht für Magnetfeldkomponenten senkrecht zu dieser Richtung, und dass der Sensor (12) an einer Position angeordnet ist, wo das statische magnetische Feld (7), das von einer Feldwicklung (5) oder von einem Permanentmagneten induziert wird, im wesentlichen senkrecht zu dieser empfindlichen Richtung des Sensors (12) ist.

19. Bürstenloser Erreger nach Anspruch 18, **dadurch gekennzeichnet, dass** der Sensor (12) benachbart zur Feldwicklung (5) in oder nahe beim Luftspalt (9) zwischen dem Rotor (4) und dem statischen äusseren Kern (3) angeordnet ist.

20. Verfahren zum Betrieb eines bürstenlosen Erregers als Speisungsquelle für die Feldwicklung des Rotors (4) eines Generators, **gekennzeichnet durch** folgende Schritte:

   - bereitstellen eines Rotors (4) mit wenigstens zwei Leiterstäben (6), welche im wesentlichen parallel zur Achse (8) des Rotors (4) angeordnet sind, wobei die Leiterstäbe an ihrem ersten axialen Ende mit einem Kollektorring (13) verbunden sind, und die Stäbe (6) an ihrem zweiten axialen Ende individuell mit zwei Ringen (14, 15) über Dioden (16) mit umgekehrter Polarität verbunden sind, so dass der in den Leiterstäben (6) infolge eines statischen Feldes (7) induzierte Wechselstrom zu einem Gleichstrom (DC) in den beiden Ringen (14, 15) konvertiert wird;
   - bereitstellen von Mitteln (12) zum Messen der Anker-Reaktion (10) während der Zeit von Transienten, wenn das statische magnetische Feld (7) entweder reduziert oder erhöht wird;
   - kontrollieren des **durch** Hilfswicklungen (11) gespeisten Stroms anhand der Messwerte.

## Claims

1. Rotor (4) for an exciter for use as a feed source for the field winding of the rotor of a generator, **characterized in that** the rotor (4) has at least two conductor bars (6) which are arranged essentially parallel to the axis (8) of the rotor (4), **in that** the conductor bars (6) are connected at their first axial end to a commutator ring (13) and **in that** the bars (6) are connected at their second axial end individually to two rings (14, 15) via diodes (16) of opposite polarity, such that the alternating current which is induced in the conductor bars (6) as a consequence of a non-changing field (7) is converted to a direct current (DC) in the two rings (14, 15).

2. Rotor (4) according to Claim 1, **characterized in that** the commutator ring (13) revolves, and **in that** the two rings (14, 15) preferably also revolve.

3. Rotor (4) according to one of the preceding claims, **characterized in that** the conductor bars (6) are arranged close to the radial surface of the rotor (4), preferably as close as possible to the air gap (8) between the rotor (4) and the static outer core (3).

4. Rotor (4) according to one of the preceding claims, **characterized in that** at least 4 conductor bars (6), preferably at least 8 conductor bars (6) and particularly preferably 16 conductor bars (6), are provided and are all distributed uniformly around the circumference of the rotor (4).

5. Rotor (4) according to one of the preceding claims, **characterized in that** the conductor bars (6) are composed of aluminium or copper, with an essentially circular cross section with a diameter in the range from 5 to 20 mm, preferably with a diameter in the range from 10 to 15 mm.

6. Rotor (4) according to one of the preceding claims, **characterized in that** the rings (13-15) are composed of aluminium or copper, with a cross-sectional area in the range from 500 to 3000 mm$^2$, preferably with a cross-sectional area in the range from 1000 to 2000 mm$^2$.

7. Rotor (4) according to one of the preceding claims, **characterized in that** the rotor (4) can be operated at a speed of 6000 to 8000 rpm, with a direct current being induced in the two rings (14, 15) of more than 2000 amperes, preferably a direct current of more than 10 000 amperes.

8. Rotor (4) according to one of the preceding claims, **characterized in that** the non-changing field (7) is produced by a field winding (5) on the static outer core (3), as a bipolar constant magnetic field.

9. Rotor (4) according to one of the preceding claims, **characterized in that** the rotor (4) can be used for brushless excitation.

10. Brushless exciter for use in a synchronous generator for feeding the field winding of its rotor, **characterized in that** the exciter surrounds a rotor (4) according to one of Claims 1 to 9.

11. Brushless exciter according to Claim 10, **characterized in that** the bipolar non-changing field (7) is induced by at least one field winding (5) which is fed with a direct current in the range from 1 to 100 amperes, preferably in a range from 5 to 15 amperes, or in that the bipolar non-changing field (7) is produced by a permanent magnet, and **in that** the bipolar non-changing field (7) is regulated by a field winding (5) in this case.

**12.** Brushless exciter according to one of Claims 10 or 11, **characterized in that** means (11) are provided in order to compensate for the armature reaction (10) of the rotating rotor (4).

**13.** Brushless exciter according to Claim 12, **characterized in that** the armature reaction is compensated for by a set of auxiliary windings (11) on the static outer core (3), and **in that** the geometry of these auxiliary windings (11) is preferably the same as that of the conductor bars (6) on the rotor (4).

**14.** Brushless exciter according to Claim 13, **characterized in that** the auxiliary windings (11) are arranged essentially on the inner surface of the static outer core (3), and **in that**, in the region of the rotor (4), the auxiliary windings (11) are oriented essentially parallel to the axis (8) of the rotor (4).

**15.** Brushless exciter according to Claim 14, **characterized in that** the same number of individual conductors are provided in the auxiliary windings (11) as the number of conductor bars (6) on the rotor (4), and **in that** these individual conductors in the auxiliary windings (11) are distributed uniformly over the circumference of the air gap (9).

**16.** Brushless exciter according to Claim 15, **characterized in that** the individual conductors in the auxiliary windings (11) are fed essentially in the same way with a direct current whose direction is opposite to the direction of the current which is induced in the conductors (6) of the rotor (4) during its rotation, so as to compensate for the armature reaction (10).

**17.** Brushless exciter according to one of Claims 12 to 16, **characterized in that** at least one sensor (12) is provided in order to measure the armature reaction (10), and **in that** the current which is fed through the auxiliary windings (11) in order to compensate for the armature reaction (10) is regulated as a function of the signal produced by this sensor (12).

**18.** Brushless exciter according to Claim 17, **characterized in that** the sensor (12) is sensitive only to magnetic-field components in one spatial direction, but not to magnetic-field components at right angles to this direction, and **in that** the sensor (12) is arranged at a position where the constant magnetic field (7) which is induced by a field winding (5) or by a permanent magnet is essentially at right angles to this sensitive direction of the sensor (12).

**19.** Brushless exciter according to Claim 18, **characterized in that** the sensor (12) is arranged adjacent to the field winding (5) in or close to the air gap (9) between the rotor (4) and the static outer core (3).

**20.** Method for operation of a brushless exciter as a feed source for the field winding of the rotor (4) of a generator, **characterized by** the following steps:

- a rotor (4) is provided having at least two conductor bars (6) which are arranged essentially parallel to the axis (8) of the rotor (4), with the conductor bars being connected at their first axial end to a commutator ring (13) and with the bars (6) being connected at their second axial end individually to two rings (14, 15) via diodes (16) of opposite polarity, such that the alternating current which is induced in the conductor bars (6) as a consequence of a non-changing field (7) is converted to a direct current (DC) in the two rings (14, 15);
- means (12) are provided for measurement of the armature reaction (10) during the time of transients when the constant magnetic field (7) is either reduced or increased;
- the current fed through auxiliary windings (11) is monitored on the basis of the measurements.

**Revendications**

**1.** Rotor (4) pour un excitateur destiné à être utilisé comme source d'alimentation pour l'enroulement d'excitation pour le rotor d'un générateur, **caractérisé en ce que** le rotor (4) comprend au moins deux barres conductrices (6) qui sont disposées pour l'essentiel parallèlement à l'axe (8) du rotor (4), que les barres conductrices (6) sont reliées à leur première extrémité axiale avec un anneau collecteur (13) et que les barres (6) sont reliées individuellement à leur deuxième extrémité axiale avec deux anneaux (14, 15) par le biais de diodes (16) de polarités opposées de sorte que le courant alternatif induit dans les barres conductrices (6) en raison d'un champ statique (7) soit converti en un courant continu (DC) dans les deux anneaux (14, 15).

**2.** Rotor (4) selon la revendication 1, **caractérisé en ce que** l'anneau collecteur (13) est continu et que les deux anneaux (14, 15) sont de préférence eux aussi continus.

**3.** Rotor (4) selon l'une des revendications précédentes, **caractérisé en ce que** les barres conductrices (6) sont disposées à proximité de la surface radiale du rotor (4), de préférence le plus près possible de l'entrefer (8) entre le rotor (4) et le noyau (3) extérieur statique.

**4.** Rotor (4) selon l'une des revendications précédentes, **caractérisé en ce qu'**il existe au moins 4 barres conductrices (6), de préférence au moins 8 barres conductrices (6) et notamment de préférence 16 barres conductrices (6), lesquelles sont toutes réparties de manière homogène sur le pourtour du rotor (4).

5. Rotor (4) selon l'une des revendications précédentes, **caractérisé en ce que** les barres conductrices (6) sont fabriquées en aluminium ou en cuivre, avec une section transversale essentiellement circulaire ayant un diamètre compris entre 5 et 20 mm, de préférence ayant un diamètre compris entre 10 et 15 mm.

6. Rotor (4) selon l'une des revendications précédentes, **caractérisé en ce que** les anneaux (13 - 15) sont fabriqués en aluminium ou en cuivre avec une surface de section transversale comprise entre 500 et 3000 mm$^2$, de préférence avec une surface de section transversale comprise entre 1000 et 2000 mm$^2$.

7. Rotor (4) selon l'une des revendications précédentes, **caractérisé en ce qu'**il peut être utilisé avec une vitesse de 6000 à 8000 t/min., un courant continu de plus de 2000 ampères, de préférence un courant continu de plus de 10 000 ampères étant induit dans les deux anneaux (14, 15).

8. Rotor (4) selon l'une des revendications précédentes, **caractérisé en ce que** le champ statique (7) est généré par un enroulement d'excitation (5) sur le noyau (3) extérieur statique sous la forme d'un champ magnétique statique bipolaire.

9. Rotor (4) selon l'une des revendications précédentes, **caractérisé en ce qu'**il peut être utilisé pour une excitation sans balais.

10. Excitateur sans balais destiné à être utilisé dans un générateur synchrone pour alimenter l'enroulement d'excitation de son rotor, **caractérisé en ce que** l'excitateur comprend un rotor (4) selon l'une des revendications 1 à 9.

11. Excitateur sans balais selon la revendication 10, **caractérisé en ce que** le champ statique bipolaire (7) est induit par au moins un enroulement d'excitation (5) qui est alimenté par un courant continu compris entre 1 et 100 ampères, de préférence compris entre 5 et 15 ampères, ou que le champ statique bipolaire (7) est généré par un aimant permanent et que la régulation du champ statique bipolaire (7) est dans ce cas réalisée par un enroulement d'excitation (5).

12. Excitateur sans balais selon l'une des revendications 10 ou 11, **caractérisé en ce que** des moyens (11) sont prévus pour compenser la réaction d'induit (10) du rotor en rotation (4).

13. Excitateur sans balais selon la revendication 12, **caractérisé en ce que** la compensation de la réaction d'induit est réalisée par un ensemble d'enroulements auxiliaires (11) sur le noyau extérieur statique (3) et que la forme géométrique de ces enroulements auxiliaires (11) est de préférence la même que celle des barres conductrices (6) du rotor (4).

14. Excitateur sans balais selon la revendication 13, **caractérisé en ce que** les enroulements auxiliaires (11) sont pour l'essentiel disposés sur la surface intérieure du noyau extérieur statique (3) et que dans la région du rotor (4), les enroulements auxiliaires (11) sont orientés pour l'essentiel parallèlement à l'axe (8) du rotor (4).

15. Excitateur sans balais selon la revendication 14, **caractérisé en ce qu'**il existe le même nombre de conducteurs individuels des enroulements auxiliaires (11) qu'il existe de barres conductrices (6) sur le rotor (4) et que ces conducteurs individuels des enroulements auxiliaires (11) sont répartis de manière homogène sur le pourtour de l'entrefer (9).

16. Excitateur sans balais selon la revendication 15, **caractérisé en ce que** les conducteurs individuels des enroulements auxiliaires (11) sont pour l'essentiel alimentés de manière identique avec un courant continu dont la direction est opposée à la direction du courant qui est induit dans les conducteurs (6) du rotor (4) lors de sa rotation, ce qui permet de compenser la réaction d'induit (10).

17. Excitateur sans balais selon l'une des revendications 12 à 16, **caractérisé en ce qu'**il existe au moins un capteur (12) pour mesurer la réaction d'induit (10) et que le courant injecté à travers les enroulements auxiliaires (11) pour la compensation de la réaction d'induit (10) est régulé en fonction du signal généré par ce capteur (12).

18. Excitateur sans balais selon la revendication 17, **caractérisé en ce que** le capteur (12) est seulement sensible aux composantes de champ magnétique dans une direction spatiale et non pas aux composantes de champ magnétique perpendiculaires à cette direction et que le capteur (12) se trouve à une position où le champ magnétique statique (7) qui est induit par un enroulement d'excitation (5) ou par un aimant permanent est pour l'essentiel perpendiculaire à cette direction sensible du capteur (12).

19. Excitateur sans balais selon la revendication 18, **caractérisé en ce que** le capteur (12) est disposé dans le voisinage du champ d'excitation (5) ou à proximité de l'entrefer (9) entre le rotor (4) et le noyau extérieur statique (3).

**20.** Procédé pour faire fonctionner un excitateur sans balais en tant que source d'alimentation pour l'enroulement d'excitation d'un rotor (4) d'un générateur, **caractérisé par** les étapes suivantes :

- fourniture d'un rotor (4) comprenant au moins deux barres conductrices (6) qui sont disposées pour l'essentiel parallèlement à l'axe (8) du rotor (4), les barres conductrices (6) étant reliées à leur première extrémité axiale avec un anneau collecteur (13) et les barres (6) étant reliées individuellement à leur deuxième extrémité axiale avec deux anneaux (14, 15) par le biais de diodes (16) de polarités opposées de sorte que le courant alternatif induit dans les barres conductrices (6) en raison d'un champ statique (7) soit converti en un courant continu (DC) dans les deux anneaux (14, 15) ;
- fourniture de moyens (12) pour mesurer la réaction d'induit (10) pendant la durée des transitoires lorsque le champ magnétique statique (7) est réduit ou augmenté ;
- contrôle du courant injecté à travers les enroulements auxiliaires (11) au moyen des valeurs mesurées.

*Fig. 1*

a) Fig. 2

Fig. 2

Fig. 3

Fig. 4

**IN DER BESCHREIBUNG AUFGEFÜHRTE DOKUMENTE**

**In der Beschreibung aufgeführte Patentdokumente**

- SU 468337